# EUROPÄISCHE PATENTANMELDUNG

(11) **EP 2 196 614 A2**
(43) Veröffentlichungstag der Anmeldung: **16.06.2010**
(21) Anmeldenummer: 09178992.5
(22) Anmeldetag: 11.12.2009
(51) Int. Cl.: E06B 7/22

(54) **Dichtungsprofil, Verbindungsvorrichtung und Dichtung**

(30) Priorität: 12.12.2008 DE 102008061709
(71) Anmelder: NORSK HYDRO ASA, 0240 Oslo (NO)
(72) Erfinder: Ernst, Johann, 86641, Rain (DE); Frank, Hans-Jörg, 89160, Dornstadt (DE); Gentner, Armin, 89407, Dillingen (DE); Kempf, Bernd, 89257, Illertissen (DE)
(74) Vertreter: Hutzelmann, Gerhard

(57) **Zusammenfassung**

Dichtungsprofil mit einem Fußteil und einem konturierten Oberteil mit wenigstens einer Dichtkante, wobei das Dichtungsprofil aus wenigstens zwei Querschnittsbereichen besteht, wobei ein Bereich aus einem kompakten Material und ein anderer Bereich aus einem geschäumten Material besteht. Hierzu eine Vorrichtung zum Verbinden von zwei Enden von Dichtungsprofilen, insbesondere von Dichtungsprofilen für Fenster- und Türkonstruktionen zwischen Flügel und Blendrahmen, mit einem Fußteil und einem konturierten Oberteil, das eine Oberkante, eine Vorderkante und eine Hinterkante aufweist, wobei die Vorrichtung als Einsetzteil ausgebildet ist, das zwischen die beiden Enden des Dichtungsprofils eingelegt wird.

## Beschreibung

Die Erfindung bezieht sich auf ein Dichtungsprofil mit einem Fußteil und einem konturierten Oberteil mit wenigstens einer Dichtkante, eine Vorrichtung zum Verbinden von zwei Enden von Dichtungsprofilen, insbesondere von Dichtungsprofilen für Fenster- und Türkonstruktionen zwischen Flügel und Blendrahmen, mit einem Fußteil und einem konturierten Oberteil, das eine Oberkante, eine Vorderkante und eine Hinterkante aufweist und auf eine Fenster- oder Türdichtung mit einem erfindungsgemäßen Dichtungsprofil.

Es sind verschiedenartigste derartige Dichtungsprofile bekannt, die zu Fenster- und Türdichtungen verarbeitet werden. Diese sind meistens relativ steif und können nicht ohne weitere Maßnahmen um die Ecken von Fenster- oder Türen geführt werden. Zu diesen Maßnahmen zählen unter anderem Formeckstücke, die in die Ecken eingesetzt werden. Das Dichtungsprofil an sich muss dann zu den Ecken hin abgelängt werden. Es ist auch bekannt, durch Formstücke die Dichtungsprofile zu unterstützen, oder diese mit spritzbarem Dichtungsmaterial, zum Beispiel Butyl zu hinterspritzen. Die Verbindung zwischen den Dichtungsprofilen erfolgt durch Vulkanisieren, Kleben oder auch durch eine Art Pressverbindung, bei der die Dichtungsprofile auf Stoß angesetzt und gegeneinander vorgespannt werden.

Es werden oftmals auch vorgefertigte als vollständige Dichtungsrahmen ausgebildete Dichtungen eingesetzt.

Dies stellt alles einen erheblichen Aufwand bezüglich Arbeit und Lagerhaltung dar. Wenn die Dichtungsprofile abgelängt werden, muss sehr genau gearbeitet werden, um das Entstehen von Wärmeverlust durch Luftdurchgang und das Eindringen von Leckwasser zu vermeiden.

Der Erfindung liegt daher die Aufgabe zugrunde, ein Dichtungsprofil und eine Vorrichtung zum Verbinden von Dichtungsprofilen vorzuschlagen, die leicht und kostensparend verarbeitet werden können, ohne eine Vielzahl von Lagerstücken zu benötigen. Zudem soll die Erfindung sicherstellen, daß keine Stellen mit Luftdurchgang entstehen und so den Wärmeverlust im Bereich des Falzes verringern.

Diese Aufgabe wird erfindungsgemäß dadurch gelöst, daß das Dichtungsprofil aus wenigstens zwei Querschnittsbereichen besteht, wobei ein Bereich aus einem kompakten Material und ein anderer Bereich aus einem geschäumten Material besteht.

Hierdurch wird ein sehr gut dichtendes und eine sehr geringe Wärmeleitfähigkeit aufweisendes Dichtungsprofil geschaffen, das darüber hinaus eine ausreichende Eigensteifigkeit aufweist.

Dabei ist es sehr vorteilhaft, wenn das Fußteil eine Rasteinrichtung aufweist, mit dem es in einem Profil für Fenster- und/oder Türkonstruktionen verankerbar ist.

Damit lässt sich das Dichtungsprofil auf einfache Art und Weise in eine Fenster- und/oder Türkonstruktion einsetzen.

Ebenfalls sehr vorteilhaft ist es, wenn wenigstens ein Teil des Fußteils aus dem kompakten Material besteht.

Damit wird eine gute Festigkeit des Fußteils geschaffen, so daß das Dichtungsprofil fest und sicher an der Fenster- und/oder Türkonstruktion verankert werden kann.

Eine weitere sehr vorteilhafte Ausgestaltung der Erfindung liegt auch dann vor, wenn das konturierte Oberteil aus dem geschäumten Material gefertigt ist.

Damit wird eine sehr gute Isolierwirkung und auch ein sehr gutes Anlegen an den Fensterflügel bzw. Türflügel sichergestellt.

Es hat sich gemäß einer Fortbildung der Erfindung auch als sehr vorteilhaft erwiesen, wenn das geschäumte Material an seinen Außenseiten eine glatte und geschlossenporige Oberfläche aufweist.

Hierdurch werden einerseits Schmutzansammlungen vermieden und andererseits wird die Reinigung des Dichtungsprofils erleichtert.

Es hat sich erfindungsgemäß auch als sehr vorteilhaft erwiesen, wenn das geschäumte Material in seinem Inneren eine geringere Dichte aufweist als an seinen Oberflächen.

Dadurch wird einerseits eine verbesserte Flexibilität der Dichtung bei gleichzeitig erhöhtem Isolationsvermögen erreicht.

Eine weitere sehr vorteilhafte Ausgestaltung der Erfindung liegt auch dann vor, wenn das geschäumte Material eine Dichte zwischen 0,35 und 0,60 g/cm³, vorzugsweise zwischen 0,40 und 0,55 g/cm³ aufweist.

Bei dieser geringen Dichte haben sich sehr gute Isolationswerte ergeben.

Ebenfalls sehr vorteilhaft ist es, wenn das kompakte Material eine Shore-Härte zwischen 60 und 80° Shore A aufweist.

Durch eine solche Härte des kompakten Materials, aus dem auch das Fußteil gebildet ist, ist eine sichere Befestigung des gesamten Dichtungsprofils gewährleistet.

Gemäß einer weiteren Ausgestaltung der Erfindung ist es auch sehr vorteilhaft, wenn das Dichtungsprofil im Koextrusionsverfahren hergestellt ist.

Hierduch lassen sich unterschiedliche Querschnittsbereiche des Dichtungsprofils sehr gut miteinander verbinden.

Äußerst vorteilhaft ist es erfindungsgemäß, wenn das kompakte und das geschäumte Material aus demselben Rohstoff bestehen und vorzugsweise aus EPDM gefertigt sind.

Damit werden Materialunverträglichkeiten vermieden. Zudem hat sich EPDM als sehr dauerhafter Werkstoff für Dichtungen erwiesen.

Eine weitere sehr vorteilhafte Ausgestaltung der Erfindung liegt auch dann vor, wenn das Dichtungsprofil wenigstens in einer Ebene eine gute Biegbarkeit aufweist.

Dadurch lässt sich das Dichtungsprofil sehr gut um Ecken herumführen.

Eine erfindungsgemäß sehr vorteilhafte Vorrichtung zum Verbinden von zwei Enden von Dichtungsprofilen, insbesondere von Dichtungsprofilen für Fenster- und Türkonstruktionen zwischen Flügel und Blendrahmen, mit einem Fußteil und einem konturierten Oberteil gemäß einem der vorangehenden Ansprüchen, das eine Oberkante, eine Vorderkante und eine Hinterkante aufweist, liegt dann vor, wenn die Vorrichtung als Einsetzteil ausgebildet ist, das zwischen die beiden Enden des Dichtungsprofils eingelegt wird.

Damit kann dem oben genannten Problem der oftmals unzureichenden Stoßstellen begegnet werden. Gerade bei dem erfindungsgemäßen, aus zwei Querschnittsbereichen bestehenden Dichtungsprofil ist es aufgrund von inneren Spannungen meistens nicht möglich, eine gerade Schnittkante bzw. Schnittfläche zu erzeugen. Die Verbindungsvorrichtung ermöglicht trotzdem eine dichte Verbindung der beiden Stoßflächen.

Dabei hat es sich als sehr vorteilhaft erwiesen, wenn das Einsetzteil einen an die Kontur des Dichtungsprofils angepassten Mittelabschnitt aufweist.

Der Mittelabschnitt ist zwischen den beiden zu verbindenden Enden des Dichtungsprofils angeordnet und sorgt dafür, daß die Stoßflächen auseinander gedrückt werden und damit mit Vorspannung am Mittelabschnitt anliegen.

Es hat sich auch als sehr vorteilhaft erwiesen, wenn das Einsetzteil wenigstens einen Führungsansatz aufweist.

Dabei ist es sehr vorteilhaft, wenn ein Führungsansatz wenigstens einen Teil des Oberteils im Stoßbereich überdeckt.

Ebenfalls sehr vorteilhaft ist es, wenn ein Führungsansatz an der Hinterkante, an der Oberkante und/oder an der Vorderkante des Dichtungsprofils vorgesehen ist.

Durch diese Führungsansätze wird sichergestellt, daß die Enden der Dichtungsprofile nicht von der Verbindungsvorrichtung abrutschen können, so daß kein Versatz auftreten kann.

Eine weitere sehr vorteilhafte Ausgestaltung der Erfindung liegt auch dann vor, wenn der Mittelabschnitt an seinen den Enden des Dichtungsprofils zugewandten Seiten eine Wölbung aufweist.

Durch diese Wölbung können systembedingte Abweichungen bei Schnitten von Dichtungsprofilen, wie diese beispielsweise bei den vorbeschriebenen koextrudierten Dichtungsprofilen auftreten, ausgeglichen werden, so daß eine dichte Stoßstelle geschaffen wird.

Äußerst vorteilhaft ist es erfindungsgemäß auch, wenn die Vorrichtung als Gerade- und/oder Eckverbinder ausgebildet ist.

Damit lassen sich beide Varianten der Verarbeitung der Dichtungsprofile realisieren.

Es hat sich gemäß einer Fortbildung der Erfindung als sehr vorteilhaft erwiesen, wenn eine Fenster- oder Türdichtung mit einem erfindungsgemäßen Dichtungsprofil hergestellt wird, wobei das Dichtungsprofil in einen Blendrahmen eingelegt und um die Ecken des Blendrahmens herumgeführt ist.

Damit lässt sich auf einfache Art und Weise, ohne aufwendige Lagerhaltung eine sehr gute Abdichtung bei Fenstern und Türen oder dergleichen herstellen, die auch nur einen geringen Arbeitsaufwand erfordert.

Dabei hat es sich als sehr vorteilhaft erwiesen, wenn die Endflächen des Dichtungsprofils miteinander verklebt sind.

Damit können die Enden des Dichtungsprofils sicher miteinander verbunden werden.

Ebenfalls sehr vorteilhaft ist es erfindungsgemäß, wenn die Enden des Dichtungsprofils mit einer erfindungsgemäßen Verbindungsvorrichtung miteinander dicht verbunden werden.

Hierdurch kann mit einfachsten Mitteln eine dichte Verbindung zweier aufeinanderstoßender Dichtungsprofile erzeugt werden, die auch systembedingt keine gerade Schnittkante bzw. Schnittfläche aufweisen müssen.

Sehr vorteilhaft ist es dabei auch, wenn eine zusätzliche Verklebung zwischen Dichtungsprofil und Verbindungsvorrichtung vorgesehen ist.

Damit können auch besonders beanspruchte Dichtungen erzeugt werden, die den mechanischen Belastungen standhalten.

Äußerst vorteilhaft ist es erfindungsgemäß auch, wenn die Dichtung entweder um die Ecken eines Blendrahmens herumgeführt oder mit Eckverbindern ausgerüstet ist.

Damit lassen sich verschiedenartigste Dichtungen auf einfache Art und Weise herstellen.

Im folgenden ist die Erfindung anhand mehrerer Ausführungsbeispiele veranschaulicht.

Dabei zeigen:
- Fig. 1: ein Schaubild eines erfindungsgemäßen Dichtungsprofils
- Fig. 2: einen Schnitt durch einen Fenster- oder Türrahmen mit eingesetztem Dichtungsprofil,

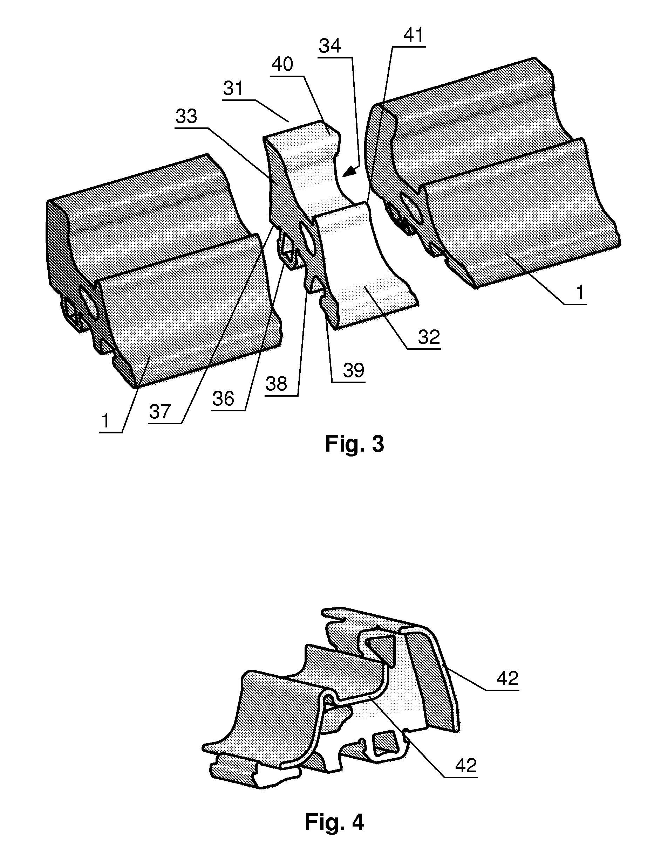

- Fig. 3: ein Schaubild einer erfindungsgemäßen Verbindungsvorrichtung,
- Fig. 4: ein Schaubild einer weiteren erfindungsgemäßen Verbindungsvorrichtung mit Führungsnasen und

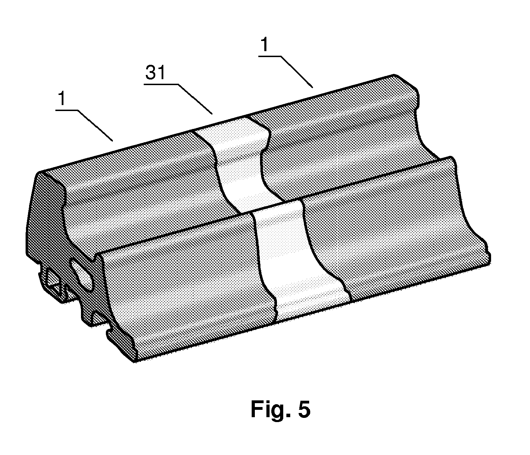

- Fig. 5: ein Schaubild eines mit einer erfindungsgemäßen Verbindungsvorrichtung verbundenen Dichtungsprofils.

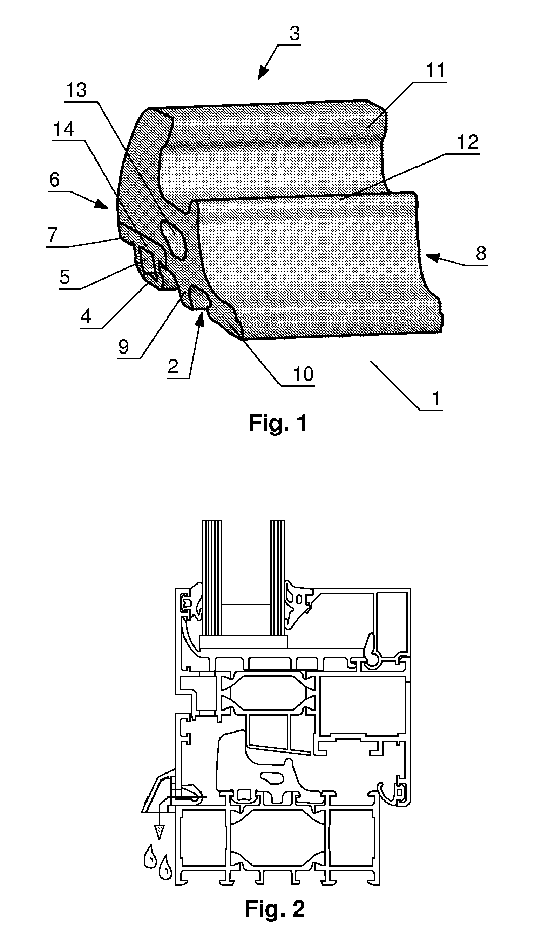

Mit 1 ist in Fig. 1 ein Dichtungsprofil mit einem Fußteil 2 und einem Oberteil 3 bezeichnet. Am Fußteil 2 ist ein Verankerungskeder 4 angeordnet, der in eine Nut 21 eines Fenster- oder Türrahmens 22 eingeführt werden kann und sich dort verhakt. Der Verankerungskeder 4 ist dünnwandig ausgebildet und weist einen inneren Hohlraum 5 auf. An den Verankerungskeder 4 angrenzend ist zur Außenseite 6 des Dichtungsprofils 1 hin eine Dichtkante 7 angeschlossen. Diese Dichtkante 7 vermag sich auf dem Rahmenprofil 22 abzustützen und verhindert das Eindringen von Wasser. Zur Innenseite 8 des Dichtungsprofils 1 hin schließen weitere Dichtlippen 9 und 10 an, die einerseits den Wärmedurchgang zwischen Fensterinnenseite und Fensteraußenseite reduzieren und andererseits dem Dichtungsprofil 1 im eingebauten Zustand einen sicheren Stand verleihen. Das Oberteil 3 weist eine Anschlagdichtkante 11 und eine Zusatzdichtkante 12 auf, die zusammen den Wärmedurchgang vermindernd und damit Wärmeverluste reduzieren. Das Oberteil kann zur Reduzierung der Masse des Dichtprofils 1 einen Hohlraum 13 aufweisen. Dieser Hohlraum 13 sorgt durch die Reduzierung der Masse nicht nur für ein geringeres Gewicht des Dichtungsprofils 1, sondern vor allem für einen verringerten Wärmetransport und eine gute Biegbarkeit.

Das Fußteil 2 kann zumindest im Bereich des Verankerungskeders 4 ebenso wie der Verankerungskeder 4 aus kompaktem Werkstoff bestehen. Wie im in Figur 1 dargestellten Ausführungsbeispiel kann aber auch die Dichtkante 7 noch aus kompaktem Werkstoff bestehen. Dieser Bereich des kompakten Werkstoffes ist mit 14 bezeichnet. Wenn die Dichtkante 7 ebenfalls aus dem kompakten Werkstoff gefertigt ist, ist diese vergleichsweise steif und legt sich damit auch ohne größere Anspresskräfte dicht an das Rahmenprofil 22 an.

Der restliche Querschnittsbereich des Dichtungsprofils 1, insbesondere aber das Oberteil 3 ist aus geschäumten Material gefertigt. Das geschäumte Material wird so hergestellt, daß die gebildete Oberfläche glatt und geschlossenporig ausgebildet ist. Nur im Inneren des Profils tritt eine Schäumung auf. Die Schäumung kann über die Dicke des Dichtungsprofils 1 unterschiedlich ausgebildet werden. Im Inneren des Dichtungsprofils 1 können größere Poren vorgesehen werden als zu den Oberflächen hin. Durch diese Dichteverteilung wird eine nochmals bessere Isolationswirkung bei gleichzeitig hoher mechanischer Stabilität der Oberflächen erzielt. Die Biegbarkeit des Profils 1 wird dadurch auch verbessert.

Das geschäumte Material kann eine Dichte zwischen 0,35 und 0,60 g/cm³, vorzugsweise zwischen 0,40 und 0,55 g/cm³ aufweisen. Bei diesen geringen Dichten wurden sehr gute Isolationswerte erreicht.

Um eine gute Festigkeit und Verankerbarkeit des Fußteils zu erzielen ist es besonders vorteilhaft, wenn das kompakte Material eine Shore Härte zwischen 60 und 80° Shore A aufweist.

Durch eine derartige Ausgestaltung wird das Dichtungsprofil 1 so flexibel, daß dieses einfach um Ecken des Rahmenprofils 22 herumgeführt werden kann, ohne daß weitere, aufwendige Maßnahmen ergriffen werden müssen. Es ist damit nicht mehr notwendig, Formeckstücke einzusetzen oder das Dichtungsprofil im Knickbereich mit einem Unterlegteil zur Stabilisierung des Dichtungsprofil zu versehen, oder, wie es auch öfters praktiziert wird, mit einem Dichtungsmittel zu hinterspritzen. Das Rahmenprofil 22 kann als Blendrahmen ausgebildet sein.

Vielmehr genügt es beim erfindungsgemäßen Dichtungsprofil 1, dieses an einer einzigen Stelle zusammenzufügen, wodurch Wärmeverluste weiter minimiert werden. Es kann beim Verbinden von Dichtungsprofilen 1 nicht immer sichergestellt werden, daß die Verbindung optimal ausgestaltet ist. Bei Verbindungen, die nur auf Stoß ausgebildet sind, ist oftmals die Pressung der Profilenden gegeneinander zu gering, so daß unter ungünstigen Bedingungen Spalten entstehen können. Daher wurden in der Vergangenheit diese Stoßstellen verklebt oder auch im Vorfeld vulkanisiert. Das Zusammenvulkanisieren ist jedoch nicht direkt beim Fensterbauer möglich, so daß der Aufwand gerade bei vielen verschiedenen Fenster- bzw. Türgrößen enorm ist.

Das erfindungsgemäße Dichtungsprofil 1 kann ebenfalls an seinen Enden miteinander verklebt oder vulkanisiert werden.

Dazu ist das Dichtungsprofil vorzugsweise aus EPDM hergestellt. Die beiden Querschnittsbereiche unterschiedlicher Dichte werden entweder durch vergleichsweise aufwendiges nachträgliches Zusammenfügen zweier Profilteile oder aber durch Koextrusion erzeugt.

Das erfindungsgemäße Dichtungsprofil 1 weist aufgrund seiner beiden unterschiedlichen Dichten innere Spannungen auf. Durch diese inneren Spannungen ist es nicht möglich, gerade Schnittkanten bzw. Schnittflächen zu erzeugen. Auch wenn mit höchster Präzision geschnitten wird, wird die sich ergebende Schnittfläche immer eine Wölbung aufweisen.

Trotzdem lassen sich diese Schnittflächen miteinander verkleben.

Es wäre aber auch denkbar, daß die Schnittflächen nachträglich abgeschliffen oder abgefräst werden, um eine ebene Fläche und eine gerade Kante zu erzeugen, die sich durch einfaches Aneinanderfügen miteinander dicht verbinden lässt. Durch eine etwas größere Länge des Dichtungsprofils 1, als eigentlich für den jeweiligen Rahmen benötigt wird, kann eine dichte Verbindung geschaffen werden, bei der die Enden des Dichtungsprofils 1 gegeneinander gepresst werden.

Allerdings ist das nachträgliche Abschleifen oder Abfräsen in den allermeisten Fällen wenig praktikabel.

Es wurde daher noch nach einer Lösung gesucht, eine dichte Verbindung der Stoßstellen des Dichtungsprofils 1 zu schaffen.

Diese Lösung wurde erfindungsgemäß darin gefunden, daß eine Verbindungsvorrichtung 31 vorgeschlagen wird, die einen Mittelabschnitt 32 aufweist, der im wesentlichen dieselbe Kontur aufweist, wie das Dichtungsprofil 1. Die dem Dichtunsprofil 1 zugewandten Seitenflächen 33 und 34 können so gewölbt sein, daß sich die Enden des Dichtungsprofils 1 vollflächig anzulegen vermögen. Der Mittelabschnitt 32 weist eine gewisse Dicke auf. Sobald die Verbindungsvorrichtung 31 zwischen zwei Enden eines Dichtungsprofils 1 gelegt wird, wird auch ein Anpressdruck der Schnittflächen des Dichtungsprofils 1 gegen die Seitenflächen 33 und 34 des Mittelabschnitts 32 erzeugt. Eine dichte Verbindung ist geschaffen.

Um die Verbindungsvorrichtung 31 gut positionieren zu können, weist diese in ihrem Fußbereich 35 wie auch das Dichtungsprofil 1 einen Verankerungskeder 36 auf. Dichtkanten 37 und Dichtnasen 38, 39, 40 und 41, die denjenigen des Dichtungsprofils 1 entsprechen sind ebenfalls vorgesehen.

Um gerade bei größeren Dicken des Mittelabschnitts 32, die für größere Anpressdrücke der Schnittflächen des Dichtungsprofils 1 sorgt, ein Ausweichen des Dichtungsprofils 1 zu vermeiden, ist es denkbar, daß am Mittelabschnitt 31 über die Seitenflächen 33 und 34 hinausragende Führungsnasen 42 vorgesehen werden, hinter die die Dichtungsprofile 1 einzugreifen vermögen. Die Führungsnasen können dabei punktuell oder auch flächig ausgebildet sein. Die Führungsnasen 42 sind im dargestellten Beispiel nicht nur an der Oberkante der Verbindungsvorrichtung 31 vorgesehen, sondern auch in deren Außenbereich.

Gerade im Außenbereich besteht die Gefahr, daß ankommendes Wasser in den Stoßbereich eindringt. Im schlimmsten Fall wäre es sogar denkbar, daß dieses Wasser in das Innere eines Gebäudes eindringt.

Wird nun eine Führungsnase 42 im Außenbereich vorgesehen, die die Stoßstelle in diesem Bereich überdeckt, so wird eine wirksamer Schutz vor Eindringen von Wasser geschaffen. Auch wird eine Zusätzliche Abdichtung der Stoßstelle gegen Zugluft geschaffen.

Es ist denkbar, daß die Verbindungsvorrichtung 31 auch nicht dargestellte Kanäle aufweist, durch die hindurch Klebstoff eingespritzt werden kann, der zu den Seitenflächen 33 und 34 geleitet wird und so eine nachrägliche Verklebung zwischen der Verbindungsvorrichtung 31 und den Dichtungsprofilen 1 geschaffen werden kann.

Die Verbindungsvorrichtung 31 kann, wie in den Zeichnungen dargestellt, als Geradeverbinder ausgebildet sein. Es ist aber auch denkbar, daß die Verbindungsvorrichtung 31 als Eckverbinder ausgebildet ist.

Die Verbindungsvorrichtung 31 ist vorzugsweise wie das Dichtungsprofil 1 aus EPDM hergestellt und kann ebenfalls kompakte und geschäumte Bereiche aufweisen.

Bei der Ausbildung der Seitenflächen 33 und 34 der Verbindungsvorrichtung 31 wurden sehr gute Ergebnisse erzielt, wenn diese einen negativen Radius von etwa 350 Millimeter aufweisen.

## Patentansprüche

1. Dichtungsprofil mit einem Fußteil und einem konturierten Oberteil mit wenigstens einer Dichtkante, **dadurch gekennzeichnet, daß** das Dichtungsprofil aus wenigstens zwei Querschnittsbereichen besteht, wobei ein Bereich aus einem kompakten Material und ein anderer Bereich aus einem geschäumten Material besteht, wobei das Fußteil eine Rasteinrichtung aufweisen kann, mit dem es in einem Profil für Fenster- und/oder Türkonstruktionen verankerbar ist und wobei wenigstens ein Teil des Fußteils aus dem kompakten Material bestehen kann und daß das konturierte Oberteil aus dem geschäumten Material gefertigt sein kann, und daß das geschäumte Material an seinen Außenseiten eine glatte und geschlossenporige Oberfläche aufweisen kann.

2. Dichtungsprofil nach Anspruch 1, **dadurch gekennzeichnet, daß** das geschäumte Material in seinem Inneren eine geringere Dichte aufweist als an seinen Oberflächen und/oder daß das geschäumte Material eine Dichte zwischen 0,35 und 0,60 g/cm³, vorzugsweise zwischen 0,40 und 0,55 g/cm³ aufweist und/oder daß das kompakte Material eine Shore-Härte zwischen 60 und 80° Shore A aufweist.

3. Dichtungsprofil nach einem der vorangehenden Ansprüchen, **dadurch gekennzeichnet, daß** das Dichtungsprofil im Koextrusionsverfahren hergestellt ist und/oder daß das kompakte und das geschäumte Material aus demselben Rohstoff bestehen und vorzugsweise aus EPDM gefertigt sind und/oder daß das Dichtungsprofil wenigstens in einer Ebene eine gute Biegbarkeit aufweist.

4. Vorrichtung zum Verbinden von zwei Enden von Dichtungsprofilen, insbesondere von Dichtungsprofilen für Fenster- und Türkonstruktionen zwischen Flügel und Blendrahmen, mit einem Fußteil und einem konturierten Oberteil gemäß einem der vorangehenden Ansprüche, das eine Oberkante, eine Vorderkante und eine Hinterkante aufweist, **dadurch gekennzeichnet, daß** die Vorrichtung als Einsetzteil ausgebildet ist, das zwischen die beiden Enden des Dichtungsprofils eingelegt wird.

5. Vorrichtung nach Anspruch 4, **dadurch gekennzeichnet, daß** das Einsetzteil einen an die Kontur des Dichtungsprofils angepassten Mittelabschnitt aufweist.

6. Vorrichtung nach Anspruch 4 oder 5, **dadurch gekennzeichnet, daß** das Einsetzteil wenigstens einen Führungsansatz aufweist.

7. Vorrichtung nach Anspruch 6, **dadurch gekennzeichnet, daß** ein Führungsansatz wenigstens einen Teil des Oberteils im Stoßbereich überdeckt.

8. Vorrichtung nach Anspruch 6 oder 7, **dadurch gekennzeichnet, daß** ein Führungsansatz an der Hinterkante, an der Oberkante und/oder an der Vorderkante des Dichtungsprofils vorgesehen ist.

9. Vorrichtung nach einem der Ansprüche 4 bis 8, **dadurch gekennzeichnet, daß** der Mittelabschnitt an seinen den Enden des Dichtungsprofils zugewandten Seiten eine Wölbung aufweist.

10. Vorrichtung nach einem der Ansprüche 4 bis 9, **dadurch gekennzeichnet, daß** die Vorrichtung als Gerade- und/oder Eckverbinder ausgebildet ist.

11. Fenster- oder Türdichtung mit einem Dichtungsprofil nach einem der Ansprüche 1 bis 3, **dadurch gekennzeichnet, daß** das Dichtungsprofil in einen Blendrahmen eingelegt und um die Ecken des Blendrahmens herumgeführt ist.

12. Fenster- oder Türdichtung nach Anspruch 11, **dadurch gekennzeichnet, daß** die Endflächen des Dichtungsprofils miteinander verklebt sind.

13. Fenster- oder Türdichtung mit einem Dichtungsprofil nach einem der Ansprüche 1 bis 3, **dadurch gekennzeichnet, daß** die Endflächen des Dichtungsprofils mit einer Verbindungsvorrichtung nach einem der Ansprüche 4 bis 10 miteinander dicht verbunden werden

14. Fenster- oder Türdichtung nach Anspruch 13, **dadurch gekennzeichnet, daß** eine zusätzliche Verklebung zwischen Dichtungsprofil und Verbindungsvorrichtung vorgesehen ist.

15. Fenster- oder Türdichtung nach Anspruch 13 oder 14, **dadurch gekennzeichnet, daß** die Dichtung entweder um die Ecken eines Blendrahmens herumgeführt oder mit Eckverbindern ausgerüstet ist.
